# EUROPÄISCHE PATENTSCHRIFT

(11) **EP 0 612 406 B1**
(45) Veröffentlichungstag und Bekanntmachung des Hinweises auf die Patenterteilung: **16.04.1997**
(21) Anmeldenummer: 92922293.3
(22) Anmeldetag: 30.10.1992
(51) Int. Cl.: G01N 21/64, G01N 21/85

(54) **VORRICHTUNG ZUR FESTSTELLUNG VON QUALITÄTSÄNDERUNGEN VON MASSENGÜTERN AUF LAUFENDEN FÖRDERBÄNDERN**
DEVICE FOR DETECTING QUALITY ALTERATIONS IN BULK GOODS TRANSPORTED ON MOVING BELT CONVEYORS
DISPOSITIF POUR DETERMINER LES VARIATIONS DE LA QUALITE DE MARCHANDISES EN VRAC SUR DES BANDES TRANSPORTEUSES EN MARCHE

(30) Priorität: 11.11.1991 DE 4137008
(43) Veröffentlichungstag der Anmeldung: 31.08.1994
(73) Patentinhaber: BROICHER, Heribert F., D-38640 Goslar (DE); ZYDEK, Arthur, D-38312 Gross-Flöthe (DE)
(72) Erfinder: BROICHER, Heribert F., D-38640 Goslar (DE); ZYDEK, Arthur, D-38312 Gross-Flöthe (DE)
(74) Vertreter: Leine, Sigurd, Dipl.-Ing.
(86) Internationale Anmeldenummer: EP9202483
(87) Internationale Veröffentlichungsnummer: WO9310436

(56) Entgegenhaltungen:
- EP-A- 0 345 949
- EP-A- 0 366 235
- US-A- 4 959 549
- PATENT ABSTRACTS OF JAPAN vol. 13, no. 492 (P-955)8. November 1989 & JP-A-11 96 536
- PATENT ABSTRACTS OF JAPAN vol. 14, no. 303 (P-1070)29. Juni 1990 & JP-A-20 96 638

## Beschreibung

Die Erfindung betrifft eine Vorrichtung der im Oberbegriff des Anspruchs 1 genannten Art zur Feststellung von Qualitätsänderungen von Massengütern auf laufenden Förderbändern.

Durch eine Veröffentlichung von SYMONDS, D.F., 1991, "On-Line Ash Analysers Improve US Efficiency", in MINTECH '91, Seiten 163 ff, Sterling Publications International Limited, London ist eine Vorrichtung zur Bestimmung des Aschegehaltes von Kohlemasseströmen auf Förderbändern bekannt, die mittels Gammastrahlenabsorption und -rückstreuung die Dichte des Materials und damit indirekt den Aschegehalt der Kohle ermittelt. Vorrichtungen dieser Art werden seit mehr als 25 Jahren von verschiedenen Herstellern, so z.B. von der Firma "Laboratorien Prof. Dr. Berthold GmbH und Co." in Wildbad, Deutschland angeboten.

Meßtechnisch gesehen haben diese Geräte den Nachteil, daß sie nur die jeweilige Dichte eines Stoffgemisches messen und damit nur bei einfachen Mischungen indirekt auf den Anteil einer bestimmten Komponente hinweisen.

Die Firma Outokumpu Electronics Oy, Finnland vertreibt ebenfalls Vorrichtungen der genannten Art, die bei dem Model Beltcon 100 mit Gammastrahlen arbeiten, während das Model Beltcon 200 die Röntgenfluoreszenz nutzen soll. Die Fachzeitschrift "Mining Journal", London beinhaltete im Mai 1991 einen entsprechenden Artikel.

Generell haben vorab beschriebene Vorrichtungen, die mit Gammastrahlen oder Röntgenfluoreszenz arbeiten, den Nachteil, daß die radioaktiven Quellen ein gesundheitliches Risiko bei Wartung und Transport darstellen und nach Verwendung entsorgt werden müssen.

Geräte zur Bestimmung von Qualitätsmerkmalen von Massengütern auf Förderbändern, die auf der Nutzung von Lichtwellen aus dem Bereich des UV-Lichtes bis zum Infrarot basieren, werden kommerziell bislang nicht angeboten.

Aus der Literatur sind Verfahren und Geräte bekannt, die Lichtquellen mit definierter Wellenlänge verwenden, um Material, wie zum Beispiel anstehendes Gestein und Kohle in einem Bergwerk oder aber einzelne Gemengteile von Material auf Förderbändern, wie zum Beispiel Diamanten im Erz von Diamantenlagerstätten oder aber Tomaten, zu bemustern und um Informationen zum Lenken, Teilen oder Mischen des Materials zur Verfügung zu stellen.

Die Patentschrift DD 293 748 A5 der Martin-Luther-Universität in Halle-Wittenberg, Deutschland aus dem Jahr 1990 nennt ein "Verfahren und Vorrichtung zum Sortieren von Tomaten nach ihrem Reifegrad". Es wird die Verwendung einer Lichtquelle mit definierter Wellenlänge zum Bestrahlen der Tomaten angeführt, die abhängig vom Reifegrad eine Photolumineszenz bestimmter Intensität aufweisen.

Die Offenlegungsschrift DE 38 18 588 A1, Bergwerksverband GmbH, Essen, Deutschland aus dem Jahr 1988 bezieht sich auf "Verfahren und Anordnung zur Unterscheidung unterschiedlicher Materialien". Hier ist die Verwendung einzelner oder mehrerer Sende- und Empfangssysteme mit definierter Anregungswellenlänge und definiertem Spektralbereich für die Auswertung angedacht, womit zum Beispiel zwischen Kohle und Nebengestein unterschieden werden soll.

Die Firma Gersan Establishment aus Liechtenstein hat im Jahr 1989 in den zwei Patentanmeldungen GB 2 219 079 A und GB 2 219 082 A Geräte zur Anreicherung von Erzen mit Diamanten beschrieben, wobei die Geräte durch eine Lichtquelle definierter Wellenlänge und zwei oder mehrere Empfangssysteme gekennzeichnet sind.

Bereits im Jahr 1980 hat die Firma Scintrex Limited aus Concord in Ontario, Kanada in der englischen Patentschrift GB 2 089 029 A "Method and Apparatus for the Remote Detection of Certain Minerals of Uranium, Zinc, Lead and Other Metals" detailliert beschrieben. Auch hier werden eine Lichtquelle mit einer definierten Wellenlänge oder aber bei einem mehrkanaligen System mehrere Lichtquellen mit jeweils einer definierten Wellenlänge zur Anregung einer Photolumineszenz angeführt.

Die australische Gesellschaft CSIRO, Commonwealth Scientific and Industrial Research Organisation, beantragte im Jahr 1989 in den USA ein Patent Nr. 4.959.549 für die "Determination of Properties of Coal". Die Oberfläche von Kohle auf einem Förderband wird mit UV-Licht angestrahlt und die Intensität der Photolumineszenz gemessen. Nach Vergleich der Meßwerte mit Referenzdaten erfolgt die Bestimmung von relevanten Eigenschaften der Kohle. Auch in diesem Anwendungsfall soll eine Lichtquelle mit einer definierten Wellenlänge zum Einsatz kommen.

Es ist bekannt, daß die Intensität der Photolumineszenz von der Wellenlänge des anregenden Lichtes abhängig ist. Diese Zusammenhänge sind in BROICHER, H.F.,1987, "Naturwissenschaftliche, technische und wirtschaftliche Aspekte bei der Entwicklung und Nutzung eines Photolumineszenz-Sensors für die Rohstoffprospektion", Verlag von Dietrich Reimer in Berlin, beschrieben.

Es ist somit für eine genaue Bestimmung von einzelnen Mineralien oder aber von der Veränderung in der Zusammensetzung von Mineralgemischen erstrebenswert, mit mehreren verschiedenen Wellenlängen für die Anregung der Photolumineszenz zu arbeiten. Weiterhin ist bekannt, daß die Absorption und die Reflexion bestimmter Wellenlängen und auch die Wärmeträgheit von Mineralien zu deren Bestimmung verwendet werden können. Dafür sind nach dem Stand der Technik für jeden spezifischen Wellenlängenbereich jeweils eine Lichtquelle erforderlich, wobei bevorzugt als Lichtquelle Laser eingesetzt werden. Soll nun das Material mit mehreren verschiedenen Wellenlängen angestrahlt werden, dann sind mehrere Lichtquellen erforderlich. Ein entsprechendes Gerät wird sehr aufwendig bezüglich der Kosten, des Platzbedarfs und des Energieverbrauchs.

Der Erfindung liegt die Aufgabe zugrunde, eine Vorrichtung der betreffenden Art zu schaffen, mit der eine Bemusterung des Massengutstromes auf einem Förderband und die Feststellung von Qualitätsänderungen durch Anregung von Photolumineszenz, durch Bestrahlung mit einer materialabhängig reflektierten Wellenlänge und durch Wärmestrahlung möglich ist.

Die der Erfindung zugrundeliegende Aufgabe wird durch die im Kennzeichen des Anspruchs 1 angegebenen Merkmale gelöst.

Grundgedanke der erfindungsgemäßen Lehre ist es, die Vorrichtung nicht mehr wie bisher mit einem Laser als Lichtquelle auszurüsten, der das Material direkt mit monochromatischem Licht bestrahlt, so daß bei mehrkanaligen Systemen mehrere Laser eingesetzt werden müssen, sondern mit nur einem Laser als Lichtquelle unter Verwendung von Frequenzvervielfachern mehrere zeitgleiche Lichtstrahlen unterschiedlicher Wellenlängen zu erzeugen und somit die für das Massengut oder für einen Bestandteil des Massengutes typische Photolumineszenz nach Anregung mit einer dafür geeigneten Wellenlänge, die Photolumineszenz nach Anregung mit einer von der ersten Anregungswellenlänge abweichenden, weniger günstigen Wellenlänge oder die Reflexion dieser Strahlung und die Wärmeträgheit, beziehungsweise die Absorption von Infrarotlicht zu erfassen und zu analysieren.

Massengüter, die mit Förderbändern transportiert werden, sind überwiegend mineralische Rohstoffe, wie zum Beispiel Kalkstein, Phosphaterz, Eisenerz, Uranerz, Kalisalze, Steinsalz, Erze der Buntmetalle, Erze der Seltenen Erden, Schwermineralerze, Stein- und Braunkohlen und Ölschiefer.

Diese Stoffe und auch Stoffgemische sowie die beim Abbau anfallenden Nebengesteine haben alle selbst oder aufgrund von Verunreinigungen bei geeigneter Anregung ein Photolumineszenzsignal. Es ist bekannt, daß bei einigen Mineralien diese Lumineszenz kurz ist, das heißt, die Lebensdauer der Fluoreszenz unter 200 Nanosekunden (nsec) liegt. Um ein solches kurzes Signal messen und auswerten zu können, muß die Anregung, beziehungsweise der Abschluß der Anregung, in einem sehr kurzen Zeitraum von wenigen Nanosekunden erfolgen. Aus diesem Grund wird nach der Lehre des Anspruchs 2 als geeignete Lichtquelle ein Laser genannt.

Ein für die hier verfolgte Materialuntersuchung besonders geeigneter Laser ist nach Anspruch 3 ein Nd:YAG-Laser, der eine Emissionswellenlänge von 1.064 nm hat.

Nach Anspruch 4 und Anspruch 5 ergibt sich durch Frequenzvervierfachung ein Lichtstrahl mit den Wellenlängen 1.064 nm, 532 nm und 266 nm. Der UV-Lichtanteil mit 266 nm ist besonders für die Anregung von Photolumineszenz in den meisten Mineralien geeignet. Der Grünlichtanteil mit 532 nm Wellenlänge kann bei einigen Mineralien ebenfalls Photolumineszenz anregen und wird parallel dazu in Reflexionsmessungen ausgewertet. Der Infrarotanteil ermöglicht Temperatur- und Reflexionsmessungen.

Die Selektion der spezifischen Wellenlänge für jeden einzelnen Kanal erfolgt mittels dichroitischer Spiegel, die gegebenenfalls bereits als konkave oder konvexe Komponenten eine gewünschte Aufweitung oder Bündelung des jeweiligen Lichtstrahls bewirken können. Die Verwendung eines Prismas für die Trennung der Lichtstrahlanteile mit verschiedener Wellenlänge ist ebenfalls möglich.

Wird das Material auf dem Förderband in mehreren Bereichen gleicher Größe und mit gleichem Abstand zueinander angestrahlt und bemustert, dann erfolgt nach Anspruch 6 das Takten des Systems in Abhängigkeit von der Laufgeschwindigkeit des Förderbandes derart, daß von den verschiedenen Lichtquellen immer dieselben Bereiche des Materials angestrahlt und anschließend bemustert werden. Somit wir erreicht, daß im Dauerbetrieb jeder Bereich von jedem unterschiedlichen Lichtstrahl angestrahlt und die erzeugten Signale erfaßt und bewertet werden.

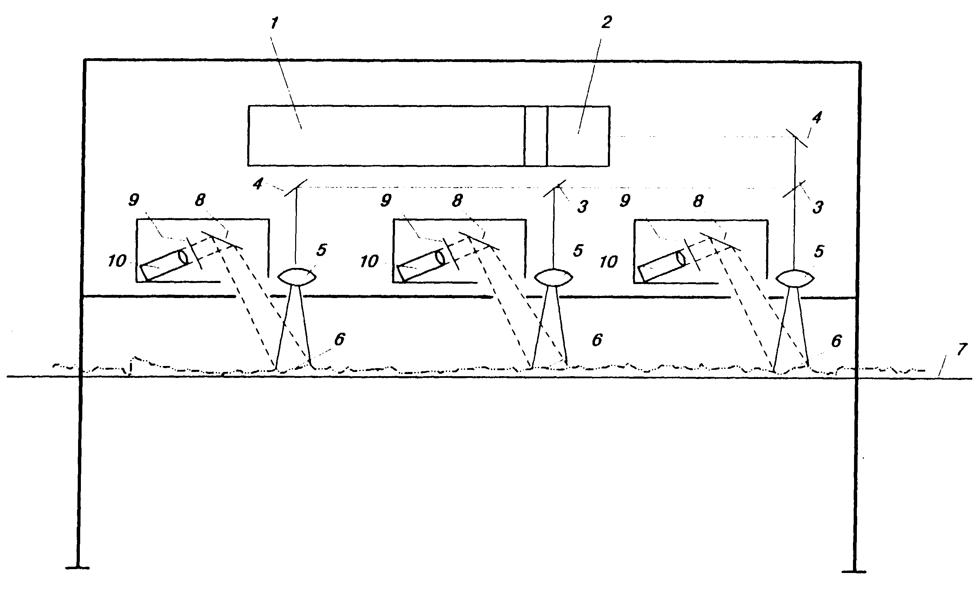

Anhand des in der Zeichnung dargestellten Ausführungsbespiels soll die Erfindung näher erläutert werden.

Die Zeichnung zeigt die bevorzugte Ausführung der Vorrichtung von der Seite in prinzipieller Darstellung.

In der Zeichnung ist ein Förderband 7 gezeigt, auf dem sich ein Massengut befindet. Über dem Förderband 7 sind zum Bestrahlen der Bereiche 6 auf der Oberfläche des Massengutes mit Licht unterschiedlicher Wellenlänge ein Laser 1 und ein angekoppelter Frequenzvervielfacher 2, Umlenkspiegel 4 und dichroitische Spiegel 3 sowie Linsen 5 zur Strahlaufweitung angeordnet. Weiterhin sind der Anzahl der Bereiche 6 entsprechend mehrere Detektorsysteme mit optischen Komponenten 8 zum Bemustern der Bereiche 6, Filter 9 zum Selektieren von auszuwertenden Wellenlängenbereichen und Photodetektoren 10 untergebracht.

Nicht gezeigt sind die elektronischen Mittel zum Takten 11 des Systems und zum Analysieren der elektrischen Signale.

## Patentansprüche

1. Vorrichtung zur Feststellung von Qualitätsänderungen von Massengütern auf laufenden Förderbändern, mit einer gepulsten, monochromatischen Lichtquelle (1) gekennzeichnet durch,
- einen an die Lichtquelle (1) angekoppelten Frequenzvervielfacher (2) zum Erzeugen mehrerer Lichtstrahlen unterschiedlicher Wellenlänge,
- mehrere optische Mittel zum Umlenken (4) und Aufweiten (5) der Lichtstrahlen, die derart angeordnet sind, daß jeder von mehreren in Laufrichtung des Förderbandes (7) hintereinander angeordneten, definierten Bereichen (6) mit einem Lichtstrahl einer definierten Wellenlänge bestrahlt wird,
- jeweils jedem dieser Bereiche zugeordnete Detektorsysteme, die jeweils Mittel zum Bemustern (8) des definierten Bereichs, Mittel zur Selektion von Wellenlängenbereichen (9), Mittel zur Erfassung von Lichtsignalen aus dem definierten Bereich und zur Umwandlung derselben in ein elektrisches Signal (10) aufweisen und
- Mittel zum Takten (11) der Lichtquelle in Abhängigkeit von der Laufgeschwindigkeit des Förderbandes (7) derart, daß derselbe Bereich eines Massengutes sich nacheinander in den verschiedenen, durch die optischen Mittel definierten Bereichen (6) befindet, wo er von den unterschiedlichen Wellenlängen bestrahlt wird.

2. Vorrichtung nach Anspruch 1, **dadurch gekennzeichnet**, daß die gepulste Lichtquelle (1) ein Laser ist.

3. Vorrichtung nach Anspruch 3, **dadurch gekennzeichnet**, daß der Laser monochromatisches Licht aus dem Wellenlängenbereich von 230 bis 1.200 Nanometern (nm) ausstrahlt, wie zum Beispiel ein Nd:YAG-Laser, der mit einer Wellenlänge von 1.064 nm strahlt.

4. Vorrichtung nach Anspruch 1, **dadurch gekennzeichnet**, daß ein Frequenzvervielfacher (2) die Frequenz verdoppelt bis vervierfacht oder mehrere Frequenzvervielfacher eine beliebige Vervielfachung und somit einen Lichtstrahl mit zwei oder mehreren Wellenlängen erzeugen.

5. Vorrichtung nach Anspruch 1, **dadurch gekennzeichnet**, daß der Frequenzvervielfacher (2) die Frequenz vervierfacht und bei einer Ausgangswellenlänge von 1.064 nm einen Lichtstrahl mit den Wellenlängen von 1.064 nm, 532 nm und 266 nm erzeugt.

6. Vorrichtung nach Anspruch 1, **dadurch gekennzeichnet**, daß die Mittel zum Takten (11) den Laser (1) in Abhängigkeit von der Laufgeschwindigkeit des Förderbandes (7) takten und so das Bestrahlen desselben Bereiches des Massengutes mit Lichtstrahlen unterschiedlicher Wellenlänge in den definierten, mit gleichem Abstand zueinander angeordneten Bereichen (6) nacheinander bewirken.

## Claims

1. An apparatus for detecting changes in quality of bulk goods on moving conveyor belts, having a pulsed monochromatic light source (1),
**characterised by**
- a frequency multiplier (2) coupled to the light source (1) for producing several light beams of different wave length,
- several optical means for deflecting (4) and diverging (5) the light beams, which are disposed in such a manner that each of several defined regions (6) disposed one behind the other in the direction of movement of the conveyor belt (7) is irradiated with a light beam of a defined wave length,
- in each case detector systems assigned to each of these regions, which in each case comprise means for sampling (8) the defined region, means for selecting wave length ranges (9), means for detecting light signals from the defined region and for converting said signals into an electric signal (10) and
- means for pulsing (11) the light source in dependence on the running speed of the conveyor belt (7) in such a manner that the same region of a bulk article is located in succession in the various regions (6) defined by the optical means, where it is radiated by the different wavelengths.

2. An apparatus according to Claim 1,
**characterised in that** the pulsed light source (1) is a laser.

3. An apparatus according to Claim 3,
**characterised in that** the laser radiates monochromatic light from the wavelength range of 230 to 1,200 nanometres (nm), such as for example an Nd:YAG laser, which radiates with a wave length of 1,064 nm.

4. An apparatus according to Claim 1,
**characterised in that** a frequency multiplier (2) doubles to quadruples the frequency or several frequency multipliers produce a random multiplication and consequently a light beam having two or more wavelengths.

5. An apparatus according to Claim 1,
**characterised in that** the frequency multiplier (2) quadruples the frequency and in the case of a initial wavelength of 1,064 produces a light beam having the wavelengths of 1,064 nm, 532 nm and 266 nm.

6. An apparatus according to Claim 1,
**characterised in that** the pulsing means (11) pulse the laser (1) in dependence on the running speed of the conveyor belt (7) and thus in succession effect the radiant exposure of the same region of the bulk article with light beams of different wave length in the defined regions (6) disposed with equal spacing to one another.

## Revendications

1. Dispositif pour déterminer les variations de la qualité de produits en vrac sur des bandes transporteuses en déplacement avec une source lumineuse monochromatique pulsée (1),
caractérisé par
- un multiplicateur de fréquence (1) accouplé à la source lumineuse (1) pour générer plusieurs rayons lumineux de longueurs d'onde différentes,
- plusieurs moyens optiques pour dévier (4) et élargir (5) les rayons lumineux qui sont disposés de telle manière que plusieurs zones définies (6), disposées les unes derrière les autres en direction de déplacement de la bande transporteuse (7), sont exposées à un rayon lumineux d'une longueur d'onde définie,
- des systèmes détecteurs, adjoints respectivement à chacune de ces zones, qui présentent respectivement des moyens pour échantillonner (8) la zone définie, des moyens pour sélectionner (9) des zones de longueurs d'onde, des moyens pour détecter des signaux lumineux provenant de la zone définie et pour les convertir en un signal électrique (10),
- des moyens pour synchroniser (11) la source lumineuse en dépendance de la vitesse de déplacement de la bande transporteuse (7) de telle manière que la même zone d'un produit en vrac se trouve successivement dans les diverses zones (6) définie par les moyens optiques où il est exposé aux différentes longueurs d'onde.

2. Dispositif selon la revendication 1,
caractérisé en ce que la source lumineuse pulsée (1) est un laser.

3. Dispositif selon la revendication 2,
caractérisé en ce que le laser émet de la lumière monochromatique dans la zone de longueurs d'onde de 230 à 1200 nanomètres (nm), comme par exemple un laser Nd:YAG, qui rayonne à une longueur d'onde de 1.064 nm.

4. Dispositif selon la revendication 1,
caractérisé en ce que le multiplicateur de fréquence (2) double à quadruple, ou plusieurs multiplicateurs de fréquence engendrent une multiplication quelconque et ainsi un rayon lumineux à deux ou plusieurs longueurs d'onde.

5. Dispositif selon la revendication 1,
caractérisé en ce que le multiplicateur de fréquence (2) quadruple la fréquence et, dans le cas d'une longueur d'onde de sortie de 1.064 nm, engendre un rayon lumineux ayant des longueurs d'onde de 1.064 nm, 532 nm et 226 nm.

6. Dispositif selon la revendication 2,
caractérisé en ce que les moyens pour synchroniser (11) synchronisent le laser (1) en dépendance de la vitesse de déplacement de la bande transporteuse (7) et causent ainsi l'exposition de la même zone du produit en vrac par des rayons lumineux de longueurs d'onde différentes successivement dans les zones définies (6) disposées au même écartement les unes des autres.
